# DEMANDE DE BREVET EUROPEEN

(11) **EP 2 927 857 A1**
(43) Date de publication de la demande: **07.10.2015**
(21) Numéro de dépôt: 15160686.0
(22) Date de dépôt: 25.03.2015
(51) Int. Cl.: G06Q 20/32, G06Q 20/40

(54) **Méthode de vérification d'authenticité d'un terminal, dispositif et programme correspondant**

(30) Priorité: 31.03.2014 FR 1452829
(71) Demandeur: COMPAGNIE INDUSTRIELLE ET FINANCIERE D'INGENIERIE "INGENICO", 75015 Paris (FR)
(72) Inventeur: Naccache, David, 75018 Paris (FR); Soubirane, Alain, 26500 Bourg-les-Valence (FR); Mayer, Laurent, 95800 Courdimanche (FR); Dabbous, Nora, 92150 Suresnes (FR); Quentin, Pierre, 95880 Enghien-les-Bains (FR)
(74) Mandataire: Vidon Brevets & Stratégie

(57) **Abrégé**

L'invention se rapporte à un procédé de vérification d'une authenticité d'un terminal de paiement (POS), mis en oeuvre à partir d'un dispositif de vérification d'authenticité (DVAuth).

Selon l'invention, un tel procédé comprend :
- une étape de transmission (100), au terminal de paiement (POS), d'une requête d'obtention (RqObt) d'une donnée d'identification (AuthD), par l'intermédiaire d'une interface de communication sans contact ;
- une étape de réception (150), par l'intermédiaire de ladite interface de communication sans contact, en provenance du terminal de paiement (POS), d'une réponse (RepQVA) à ladite requête d'obtention d'une donnée d'identification (AuthD) ;
- une étape de comparaison (200) d'un champ (FldDAuth) de ladite réponse (RepQVA) avec au moins une donnée d'identification (AuthDpe) préalablement enregistrée.
- lorsque le champ (FldDAuth) comprend une donnée d'identification identique à ladite au moins une donnée d'identification (AuthDpe) préalablement enregistrée, une étape de délivrance (250) d'une assertion d'authenticité dudit terminal de paiement (POS) ;
- lorsque le champ (FldDAuth) comprend une donnée d'identification différente de ladite au moins une donnée d'identification (AuthDpe) préalablement enregistrée, une étape de délivrance (250) d'une information d'absence d'authentification du terminal de paiement (POS).

## Description

### 1. Domaine

L'invention se rapporte au domaine des terminaux de paiement. La technique se rapporte plus particulièrement à la sécurisation des terminaux de paiement.

### 2. Art Antérieur

Les terminaux de paiement font l'objet de nombreuses tentatives d'attaques. En effet, de par la nature des informations qu'il contient et de par la sensibilité des données qu'il traite, le terminal de paiement est un objet qui possède une grande valeur pour des personnes malveillantes. Un certain type de fraude temps à prendre de l'ampleur : il s'agit de substituer un terminal de paiement valide par un terminal de paiement contrefait. Le terminal de paiement valide est substitué dans un commerce et immédiatement remplacé par un terminal de paiement qui une apparence de validité, mais qui en réalité soit a été modifié, par exemple pour lire et copier les données des cartes bancaires des clients, soit à complètement et vidé de son contenu, lequel a été remplacé par un simple matériel de lecture et d'enregistrement de données de clients. Le commerçant non avisé peut aisément être dupé et ne pas se rendre compte de la fraude avant plusieurs jours.

Une manière pour résoudre ce problème de remplacement peut consister en l'application d'un marquage sur le terminal. Un tel marquage permet au commerçant de se rendre compte de la substitution de son terminal. Cette technique est efficace à partir du moment où le fraudeur n'est pas lui-même en mesure de reproduire ce marquage. Cette technique est donc limitée par la capacité du fraudeur à reproduire le marquage. Or, pour qu'un marquage soit efficace, il doit être visible. S'il est visible, ce marquage est également visible par le fraudeur qui peut donc aisément le reproduire. Ainsi, cette solution simple d'application d'un marquage n'est en réalité pas réellement efficace.

Une autre manière de résoudre ce problème est de ne disposer que de terminaux de paiement filaires, c'est à dire de terminaux de paiement connectés physiquement à une caisse enregistreuse par exemple. Cette solution est certes efficace, mais en réalité elle est peu adaptée à la pratique actuelle qui consiste à offrir une plus grande mobilité aux commerçants et aux clients. Néanmoins, cette technique est utilisée par exemple dans les grandes surfaces ou dans certains types de magasins.

Les techniques existantes sont néanmoins limitées lorsqu'il s'agit de prévenir ou d'empêcher la réalisation de la fraude dans des commerces de moindre envergure. Il existe donc un besoin de fournir une technique qui permette au commerçant de détecter une fraude par substitution de terminal et qui permette de se prémunir des effets négatifs d'une telle fraude.

### 3. Résumé de l'invention

L'invention ne pose pas ces problèmes de l'art antérieur. Plus particulièrement, l'invention apporte une solution simple à la problématique préalablement identifiée. L'invention se rapporte plus particulièrement à un procédé de vérification d'une authenticité d'un terminal de paiement, mis en oeuvre à partir d'un dispositif de vérification d'authenticité. Selon la technique proposée un tel procédé comprend :
- une étape de transmission, au terminal de paiement, d'une requête d'obtention d'une donnée d'identification, par l'intermédiaire d'une interface de communication sans contact ;
- une étape de réception, par l'intermédiaire de ladite interface de communication sans contact, en provenance du terminal de paiement, d'une réponse à ladite requête d'obtention d'une donnée d'identification ;
- une étape de comparaison d'un champ de ladite réponse avec au moins une donnée d'identification préalablement enregistrée ;
- lorsque le champ comprend une donnée d'identification identique à ladite au moins une donnée d'identification préalablement enregistrée, une étape de délivrance d'une assertion d'authenticité dudit terminal de paiement ;
- lorsque le champ comprend une donnée d'identification différente de ladite au moins une donnée d'identification préalablement enregistrée, une étape de délivrance d'une information d'absence d'authentification du terminal de paiement.

Ainsi, la technique proposée permet d'éviter le remplacement d'un terminal de paiement authentique par un terminal de paiement frauduleux. En effet, l'interface de communication sans contact assure qu'il sera très difficile, pour le fraudeur, d'obtenir une information susceptible d'être reproduite. En fonction des modes de réalisation, la transmission de l'assertion d'authenticité ou de l'information d'absence d'authenticité peut être soit un affichage d'in message sur un écran, soit la mise en oeuvre d'une alarme sonore, soit la transmission d'un message à un serveur d'un réseau de communication ou une combinaison de moyens. L'avantage réside dans la manière dont on va informer le commerçant en fonction d'une situation donnée.

Selon une caractéristique particulière, ladite interface de communication sans contact est une interface NFC. Ainsi, la technique proposée permet de limiter de manière drastique les signaux transmis en vue de procéder à l'authentification des terminaux de paiement, permettant ainsi de réduire fortement les possibilités de piratage de ces signaux par un fraudeur. Accessoirement, la fréquence de transmission du signal à destination de l'interface NFC du terminal de paiement est fonction de la quantité de plastique que doit traverser le signal. La puissance et la fréquence sont donc un compromis entre la nécessité d'obtenir une réponse de la part de l'interface NFC du terminal de paiement et la volonté de ne pas diffuser le signal avec une portée trop importante.

Selon un mode de réalisation particulier, lorsqu'aucune réponse n'est reçue ladite étape de transmission d'une requête d'obtention d'une donnée d'identification est mise en oeuvre de manière itérative durant une durée préalablement déterminée avant de délivrer une information d'absence d'authentification du terminal de paiement.

Selon un mode de réalisation particulier, ladite étape de comparaison comprend :
- une étape de déchiffrement de la réponse délivrant une réponse déchiffrée ;
- une étape d'obtention, au sein d'une structure de données, d'au moins une donnée d'identification associée audit terminal de paiement, délivrant ladite au moins une donnée d'identification préalablement enregistrée.

Ainsi, la technique proposée permet de disposer d'un terminal de vérification d'authenticité qui peut être utilisé pour effectuer une vérification de plusieurs terminaux de paiement.

Selon un mode de réalisation particulier, ladite donnée d'identification comprend en outre au moins une composante évolutive dans le temps et en ce que cette composante évolutive dans le temps est issue d'un temps de référence calculé en fonction dudit terminal de vérification d'authenticité. Ainsi, il n'est pas possible, même quand le terminal de paiement est compromis, de disposer d'un moyen de vérifier son authenticité.

Selon un mode de réalisation particulier, ledit procédé comprend :
- une étape d'obtention d'un temps de référence ;
- une étape de calcul d'une composante évolutive dans le temps en fonction de ce temps de référence.

Ainsi, un terminal de paiement compromis qui tenterait d'imiter le comportement d'un terminal original serait dans l'impossibilité de reproduire la composante évolutive dans le temps. Cette composante est soit calculée par le terminal de vérification de l'authenticité, soit par un serveur distant auquel le terminal de vérification en fait la demande par l'intermédiaire d'un échange de type requête/réponse.

Dans au moins un mode de réalisation, l'invention se rapporte également à un dispositif de vérification d'une authenticité d'un terminal de paiement, dispositif caractérisé en ce qu'il comprend :
- des moyens de transmission, au terminal de paiement, d'une requête d'obtention d'une donnée d'identification, par l'intermédiaire d'une interface de communication sans contact ;
- des moyens de réception, par l'intermédiaire de ladite interface de communication sans contact, en provenance du terminal de paiement, d'une réponse à ladite requête d'obtention d'une donnée d'identification ;
- des moyens de comparaison d'un champ de ladite réponse avec au moins une donnée d'identification préalablement enregistrée.
- des moyens de délivrance d'une assertion d'authenticité dudit terminal de paiement ;
- des moyens de délivrance d'une information d'absence d'authentification du terminal de paiement.

Dans un autre mode de réalisation, la technique proposée se rapporte à un terminal de communication. Un tel terminal de communication, par exemple de type smartphone, comprend des moyens de communication sans contact (par exemple de type NFC), permettant la transmission et la réception de données en provenance d'étiquettes sans contact ou provenant d'autres terminaux comprenant des interfaces de communication sans contact. Ces moyens sont pilotés par un module de contrôle de validité. Un tel module de contrôle de validité est utilisé en conjonction avec les moyens de traitement et de communication du terminal de communication pour transmettre une requête d'obtention d'une donnée d'identification, recevoir une réponse à cette requête d'obtention, comparer cette réponse avec des données d'identification préalablement enregistrées et délivrer une assertion d'authenticité lorsque ces données reçues concordent avec des données préenregistrées.

Dans au moins un mode de réalisation, l'invention se rapporte également à un terminal de paiement du type comprenant un dispositif d'affichage, un clavier de saisie d'information, des moyens de lectures de données en provenance d'au moins un dispositif de paiement et des moyens de connexion à au moins un réseau de communication, terminal caractérisé en ce qu'il comprend en outre des moyens de stockage, au sein d'une zone mémoire spécifique, d'au moins une donnée représentative d'une identification dudit terminal et des moyens de réception d'une requête d'obtention de ladite donnée représentative d'une identification dudit terminal et des moyens de transmission de ladite donnée représentative d'une identification dudit terminal.

Dans au moins un mode de réalisation complémentaire, le terminal de paiement présenté préalablement comprend également un dispositif de vérification d'une authenticité.

Ainsi, deux terminaux de paiement d'un même commerce peuvent être utilisés pour vérifier l'authenticité l'un de l'autre. Dans un autre mode de réalisation, la technique proposée se rapporte également à un terminal de paiement. Un tel terminal de paiement comprend, en sus des éléments usuels, au moins un marquage matérialisé sous la forme d'une donnée d'identification insérée dans une étiquette. Cette étiquette est-elle même introduite au sein du terminal, par exemple sur un composant électronique soudé sur une carte mère du terminal ou bien encore dans le boitier en plastique lui-même (dans ce cas l'étiquette est insérée dans le boitier au moment de la création du boitier).

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 présente un système dans laquelle la technique proposée peut être mise en oeuvre ;
- la figure 3 décrit un dispositif de vérification d'authenticité ;
- la figure 4 décrit un terminal de paiement intégrant un élément de vérification d'authenticité.

### 5. Description

### 5.1. Rappel du principe

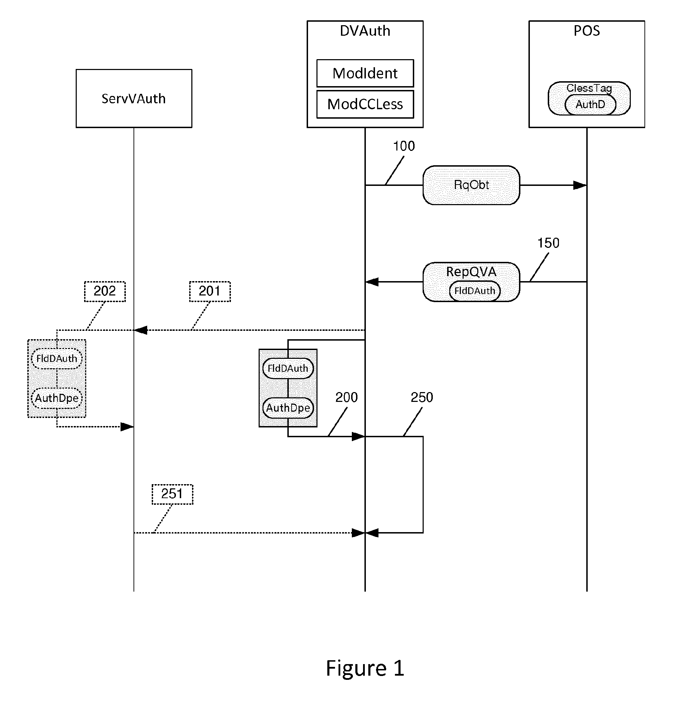

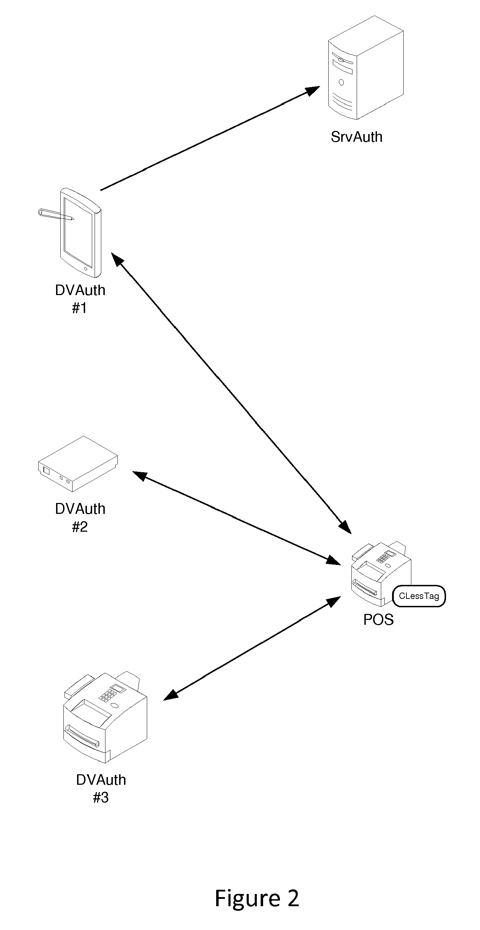

Le principe général de la technique proposée, décrit en relation avec les figures 1 et 2, consiste à munir le terminal de paiement (POS) d'une donnée d'identification (AuthD) qui peut être vérifiée par un dispositif de vérification d'authenticité (DVAuth) (par exemple un terminal de communication mobile (DVAuth#1), un socle de rechargement (DVAuth#2) ou encore un autre terminal de paiement ((DVAuth#3), jumeau ou apparié au terminal de paiement (POS)).

Cette donnée d'identification est insérée au sein du terminal de paiement (POS) afin de produire un marquage. Ce marquage, invisible, n'est pas reproductible par un fraudeur. Ce marquage permet par ailleurs de garantir l'authenticité du terminal de paiement (POS).

La donnée d'identification (AuthD) peut être fixe (par exemple représentative d'un numéro de série) ou variable (par exemple un mot de passe à usage unique généré aléatoirement en fonction d'une méthode de génération prédéterminée). La donnée d'identification est insérée par exemple dans une étiquette sans contact. Cette étiquette sans contact (CLessTag) peut ainsi être interrogée par un terminal de vérification d'authenticité, comme un terminal de communication, afin de vérifier l'authenticité du terminal de paiement (POS). Dans un mode de réalisation particulier, cette étiquette sans contact (CLessTag) est insérée directement au sein du plastique du boitier du terminal de paiement, par exemple durant la fabrication de celui-ci. Il peut s'agir d'une étiquette passive (cas par exemple d'une donnée d'identification (AuthD) représentative d'un numéro de série du terminal de paiement (POS)) ou d'une étiquette « semi-active » (aussi appelés BAP, de l'anglais pour "Battery-Assisted Passive tags", marqueurs passifs assistés par batterie) qui peut être utilisée par exemple lorsque la donnée d'identification (AuthD) évolue dans le temps (donnée d'identification variable).

Dans un autre mode de réalisation, le terminal de paiement (POS) comprend un module de communication sans contact (ModCCLess) et un module d'identification (Modldent). Ce module d'identification (Modldent) comprend une zone de mémoire sécurisée dans laquelle la donnée d'identification (AuthD) du terminal de paiement est inscrite. Dans ce cas de figure, il n'y a pas d'étiquette sans contact (CLessTag) a proprement parlé, mais lorsqu'il reçoit une requête d'obtention de donnée d'identification (AuthD), le terminal se comporte comme si il contenait une étiquette sans contact (CLessTag).

La vérification de l'authenticité du terminal de paiement (POS) comprend les étapes suivantes, qui sont par exemple mises en oeuvre à partir d'un autre dispositif de vérification d'authenticité (DVAuth) en possession du commerçant :
- une étape de transmission (100), au terminal de paiement (POS), d'une requête d'obtention (RqObt) d'une donnée d'identification (AuthD) ; cette requête est transmise par le dispositif de vérification d'authenticité (DVAuth).
- une étape de réception (150), en provenance du terminal de paiement (POS), d'une réponse (RepQVA) à ladite requête d'obtention d'une donnée d'identification (AuthD) ; il s'agit typiquement de la réponse de l'étiquette (CLessTag) ou du terminal de paiement (POS) lui-même (qui se comporte comme une étiquette) ; cette réponse comprend, quand le terminal est authentique, la donnée d'identification (AuthD) du terminal, par exemple au standard EPC-96, dans un champ (FldDAuth).
- une étape de comparaison (200) d'un champ (FldDAuth) de ladite réponse (RepQVA), qui comprend la donnée d'identification quand le terminal est authentique, avec au moins une donnée d'identification (AuthDpe) préalablement enregistrée ou préalablement connue; cette comparaison peut être effectuée par l'intermédiaire du module de vérification d'authenticité propre au terminal de communication ; comme explicité préalablement, ce module peut être un module matériel dédié ou un module logiciel ; cette comparaison peut être effectuée (201, 202) par l'intermédiaire d'un serveur de vérification d'authenticité (ServVAuth) auquel le terminal de vérification d'authenticité est connecté (ceci permet d'éviter une compromission du terminal de vérification) ;
- lorsque le champ (FldDAuth) comprend une donnée d'identification identique à ladite au moins une donnée d'identification (AuthDpe) préalablement enregistrée, une étape de délivrance (250) d'une assertion d'authenticité dudit terminal de paiement (POS) ; Cette étape peut également être mise en oeuvre par le serveur (251) ;
- lorsque le champ (FldDAuth) comprend une donnée d'identification différente de ladite au moins une donnée d'identification (AuthDpe) préalablement enregistrée, une étape de délivrance (250) d'une information d'absence d'authentification du terminal de paiement (POS) ; Cette étape peut également être mise en oeuvre par le serveur (251) ;

Typiquement, le dispositif de vérification d'authenticité (DVAuth) est un terminal de communication mobile, comprenant un module (logiciel ou matériel) de vérification d'authenticité (Modldent).

Bien entendu, lorsque la transmission de la requête d'obtention d'une donnée d'identification (AuthD) ne reçoit aucune réponse (c'est à dire que le terminal ne répond pas au signal transmis par le terminal de communication), la dernière étape de la méthode est également mise en oeuvre (on considère alors que le terminal est corrompu et qu'il n'est pas authentique).

De manière complémentaire, dans au moins un mode de réalisation, lorsque le terminal de paiement (POS) ne répond pas à la première transmission de la requête d'obtention d'une donnée d'identification (AuthD), les étapes de transmission et de réception sont mise en oeuvre plusieurs fois avant de conclure à l'absence d'authenticité du terminal.

Dans un autre mode de réalisation, en lieu et place d'un terminal de communication mobile, il est possible d'utiliser un autre dispositif de vérification. Il peut par exemple s'agir du socle sur lequel le terminal est posé lorsqu'il est en charge. Un tel socle peut être équipé d'un module de vérification d'authenticité tel que décrit préalablement et d'une interface de transmission réception sans contact (en champs proche NFC). Dans ce cas, plutôt que d'activer une application sur son terminal de communication, le commerçant appuie sur un boutant du socle de rechargement : le socle de rechargement effectue alors les mêmes opérations que celles décrites préalablement. Dans ce mode de réalisation, la délivrance de l'assertion permet par exemple d'allumer une LED de couleur verte alors que l'absence d'authenticité du terminal de paiement (POS) génère l'allumage d'une LED de couleur rouge.

De manière complémentaire, dans ce mode de réalisation, un module de régulation temporel est également présent au sein du socle de rechargement. Ce module de régulation temporel est couplé avec le module de vérification de l'authenticité du terminal. Plus particulièrement, le module de régulation temporel comprend une zone mémoire incrémentée automatiquement après une opération de vérification de l'authenticité du terminal. Plus particulièrement encore, le module de régulation temporel comprend une zone mémoire sécurisée au sein de laquelle, pour une identité de terminal de paiement (POS), une valeur temporelle est régulièrement incrémentée. Dans ce mode de réalisation, lorsque la valeur temporelle atteint un plafond déterminé, le module de régulation temporel transmet au module de vérification de l'authenticité, une instruction de vérification de l'authenticité du terminal. Dans ce mode de réalisation, le socle de rechargement attend donc que le terminal de paiement (POS) soit posé sur le socle pour effectuer une vérification de l'authenticité (sans intervention de l'utilisateur). En cas d'authenticité, l'assertion d'authenticité est délivrée (selon le mode de réalisation choisi pour cette délivrance). En cas de non vérification, un avertissement est transmis au commerçant.

Alternativement, ce module de régulation temporel peut également être mis en oeuvre au sein du terminal de communication de l'utilisateur ou bien d'un autre terminal de paiement. En effet, la norme de communication de type sans contact peut être mise en oeuvre à quelques mètres de distance du terminal de paiement (POS). Dès lors, il est tout à fait possible (et envisagé) de faire en sorte que le module de régulation temporel, implémenté sous une forme logiciel, prenne seul l'initiative de vérifier l'authenticité du terminal de paiement (POS) afin de décharger le commerçant de cette obligation.

La transmission de l'avertissement de non authenticité au commerçant peut également être effectuée de plusieurs façons différentes, chacune ayant des avantages. Dans un premier mode de réalisation, cette assertion est transmise à un processeur pour affichage (comme cela peut être envisagé sur le terminal de communication de l'utilisateur) : ceci assure une certaine discrétion de la transmission. Dans un autre mode de réalisation, l'absence d'assertion peut déclencher une alarme (visuelle ou sonore) sur le terminal en charge de la vérification (le terminal de communication de l'utilisateur ou le socle de rechargement par exemple) : ceci assure que le commerçant sera immédiatement averti de la fraude. Dans un autre mode de réalisation encore, l'assertion (ou l'alarme) est transmise à un serveur de gestion de parcs de terminaux de paiement, par l'intermédiaire d'un réseau de communication. Cette transmission peut être effectuée par le terminal de communication du commerçant ou par une caisse enregistreuse à laquelle le socle de rechargement est connecté).

Par ailleurs, dans au moins un autre mode de réalisation, le procédé de vérification d'authenticité peut être mis en oeuvre par un autre terminal de paiement (POS) en possession du commerçant. En effet, il est fréquent (notamment dans les espaces de vente ou les boutiques assez grandes) que plusieurs terminaux de paiements soient utilisés conjointement. Dans ce cas, afin de limiter les coûts de production, les terminaux de paiement peuvent comporter à la fois une donnée d'identification (AuthD) et à la fois les moyens nécessaires à l'obtention d'une donnée d'identification (AuthD) d'un autre terminal de paiement (POS). Ainsi, dans ce cas de figure, le fraudeur doit substituer et remplacer tous les terminaux de paiement du commerçant pour réaliser la fraude.

### 5.2. Description d'un premier mode de réalisation complémentaire

Dans ce mode de réalisation, on suppose que le terminal de paiement (POS) comprend une étiquette passive de type NFC comprenant une donnée représentative du numéro de série du terminal. Plus particulièrement, la donnée représentative du numéro de série du terminal est issue d'un chiffrement du numéro de série du terminal de paiement (POS). Le chiffrement est réalisé à l'aide d'une paire de clé de chiffrement asymétrique. L'étiquette comprend donc un version chiffrée du numéro de série. Cette étiquette est moulée en même temps qu'une pièce du boitier du terminal de paiement (POS). Alternativement, cette étiquette est collée quelque part à l'intérieur du boitier du terminal de paiement (POS).

Dans ce mode de réalisation, le commerçant dispose d'un terminal de communication de type smartphone. Ce terminal comprend un module de vérification d'authenticité qui se présente sous la forme d'une application, installée sur ce smartphone. L'application est initialisée afin de contenir, dans un espace de stockage sécurisé du terminal de communication, les numéros de série des terminaux de paiement du commerçant. Cette phase d'initialisation est soit mise en oeuvre par le commerçant lui-même ou par le fournisseur de terminaux, lors de l'initialisation du terminal pour le commerçant.

Le procédé mis en oeuvre est le même que celui décrit préalablement. Cependant, l'étape de comparaison est adaptée à la nature chiffrée de la donnée d'identification (AuthD). Ainsi, en sus de la comparaison a proprement parlé, cette étape comprend :
- une étape de déchiffrement de la réponse délivrant une réponse déchiffrée ;
- une étape de comparaison de la réponse déchiffrée avec les numéros de série enregistrés au sein du terminal.

L'étape de déchiffrement peut être mise en oeuvre par le terminal de communication lui-même : cela suppose qu'il possède les matériaux cryptographiques nécessaires à ce déchiffrement. Une telle possibilité est avantageuse car le terminal de communication fonctionne alors en autonomie. L'étape de déchiffrement peut être mise en oeuvre par un serveur du fournisseur ou fabricant de terminaux de paiement. Une telle possibilité est avantageuse car le terminal de communication ne comprend pas de matériel cryptographique.

Ces modes de réalisation sont adaptés au terminaux de communication de type smartphone, mais également aux socles de rechargement, ou aux autres terminaux de paiement. Ils présentent l'avantage de sécuriser la transmission et la réception des données, ce qui est important pour contrer les tentatives de scan préalables aux remplacements des terminaux par les fraudeurs. De plus, dès qu'un terminal est détecté comme manquant ou frauduleux par cette méthode, le numéro d'identification du terminal subtilisé est transmis à un serveur central qui peut alors redistribuer ce numéro afin de retirer le terminal subtilisé de la liste des terminaux autorisés à s'authentifier auprès des serveurs bancaires ou des serveurs des fournisseurs de services de paiement.

### 5.3. Description d'un deuxième mode de réalisation complémentaire

Dans ce deuxième mode de réalisation, la donnée d'identification (AuthD) comprend au moins une composante évolutive dans le temps (il s'agit par exemple d'une donnée de type OTP, pour "One Time Password"). Cette donnée est calculée à la fois par le dispositif de vérification de l'authenticité et à la fois par le module d'authenticité du terminal de paiement (POS).

Pour ce qui est du terminal de paiement (POS), dans ce mode de réalisation au moins deux possibilités sont offertes :
- une intégration, dans le boitier, d'une étiquette semi active, capable de réaliser le traitement de calcul du mot de passe lorsqu'elle est sollicitée par un autre terminal de paiement (POS).
- une intégration de la fonction au sein même du terminal de paiement (POS), dans un processeur commun ou dédié à cette fonction, à l'aide des zones de mémoire sécurisées à sa disposition, afin que le terminal de paiement (POS) puisse répondre (comme s'il était une étiquette passive) à la requête qui lui est faite.

Le dispositif de vérification de l'authenticité, quant à lui des moyens de calcul de cette donnée évolutive selon des dispositions similaires à celles mises en oeuvre par le terminal de paiement (POS).

Par ailleurs, ce deuxième mode de réalisation est combinable avec le premier mode de réalisation. Ceci signifie par exemple que le dispositif de vérification de l'authenticité comprend en outre éventuellement les moyens nécessaires à la mise en oeuvre du déchiffrement tel qu'indiqué dans le premier mode de réalisation, lorsque ces moyens sont nécessaires.

Dans un mode de réalisation, la procédure de génération de cette composante évolutive dans le temps est la suivante :
-a- obtention d'un temps de référence, par le dispositif de vérification d'authenticité (DVAuth) ;
-b- concaténation optionnelle, à ce temps de référence, d'une donnée d'identification (AuthD) de dispositif de vérification d'authenticité (DVAuth) ;
-c- chiffrement optionnel (soit de la donnée issue de l'étape -a-, soit de celle issue de l'étape - b-) ;
-d- insertion dans la requête d'obtention de la donnée d'identification (AuthD) (soit de la donnée issue de l'étape -a-, soit de celle issue de l'étape -b-, soit de celle issue de l'étape - c-);

Ces étapes peuvent également, toute ou partie, être mise en oeuvre par un serveur distant auquel le terminal de vérification est connecté. Ceci permet d'augmenter encore la sécurité de la méthode proposée. Par ailleurs, il n'est pas forcément nécessaire d'introduire cette donnée dans la requête. Pour augmenter encore la sécurité, la donnée peut être transmise par un serveur auquel le terminal de paiement devra se connecter. Pour le terminal de paiement (POS), qui doit transmettre une réponse à cette requête, la procédure est la suivante :
-a- déchiffrement optionnel du contenu de la requête, en fonction de matériel cryptographique à disposition du terminal de paiement (POS) (soit d'un processeur de celui-ci, soit de l'étiquette cryptographique) ;
-b- obtention du temps de référence (soit depuis la donnée déchiffrée du -a-, soit directement depuis la donnée présente dans la requête ou depuis le serveur) ;
-c- mise en oeuvre du calcul d'une composante évolutive dans le temps en fonction de ce temps de référence, afin qu'elle puisse être comparée à la composante évolutive dans le temps calculée du côté du terminal de vérification de l'authenticité ;
-d- transmission, sous forme d'un signal réponse de cette composante évolutive dans le temps au dispositif de vérification de l'authenticité (éventuellement chiffré et éventuellement concaténé avec un identifiant tel que le numéro de série).

Les étapes suivantes et précédentes à cette procédure sont identiques ou similaires à celles déjà décrites dans les autres modes de réalisation. Alternativement, plutôt que de transmettre cette donnée au dispositif de vérification de l'authenticité, le terminal de paiement (POS) l'affiche sur un de ses écrans (le terminal de paiement (POS) est préalablement basculé dans un mode dit de vérification). Cette donnée est également affichée sur le terminal de vérification et l'utilisateur peut visuellement les comparer. Si ces deux données sont identiques, l'utilisateur peut en déduire que le terminal est authentique. Ce mode de réalisation alternatif (affichage de le donnée évolutive sur un écran) est implémenté lorsque la méthode proposée est exécutée par un processeur du terminal de paiement (POS) (et non pas par une étiquette).

Ces modes de réalisation sont particulièrement bien adaptés dans des cas de fraudes ou de tentatives de fraudes sophistiquées dans lesquelles le fraudeur prend soin de réaliser des enregistrements préalables des signaux radio véhiculés au sein de la surface de vente, enregistrements dont il réalise une analyse afin d'isoler la requête transmise par le terminal de vérification d'authenticité et la réponse transmise par le terminal de paiement (POS) ou bien quand le fraudeur, averti de la présence d'un terminal qui implémente la présente technique, réussi à réaliser plusieurs tentatives requêtes/réponses avec un terminal de communication en sa possession. Avec le mode de réalisation proposé, ce fraudeur ne pourrait pas obtenir le duo formé de la donnée évolutive et du numéro de série de l'appareil. Il ne pourrait donc pas fabriquer un terminal contrefaisant échappant à cette contre mesure.

### 5.4. Autres caractéristiques et avantages

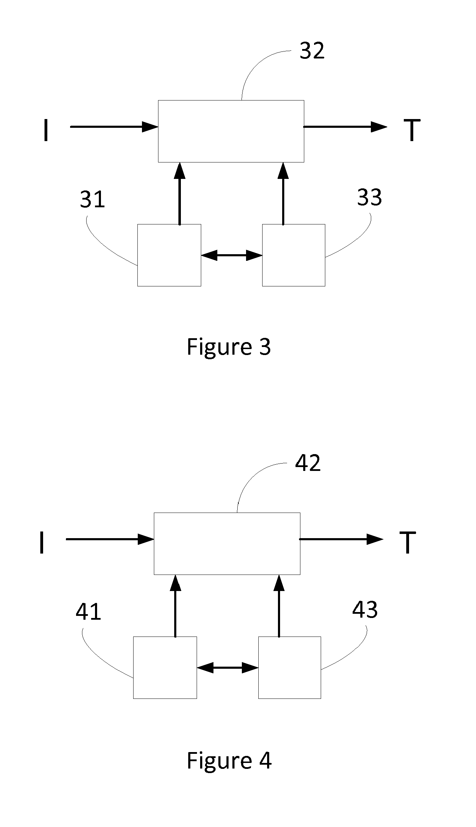

On décrit, en relation avec la figure 3, un dispositif de vérification d'authenticité comprenant des moyens d'exécution du procédé décrit préalablement.

Par exemple, le dispositif comprend une mémoire 31 constituée d'une mémoire tampon, une unité de traitement 32, équipée par exemple d'un microprocesseur, et pilotée par le programme d'ordinateur 33, mettant en oeuvre un procédé de vérification d'authenticité.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée par exemple une donnée représentative d'un identifiant de terminal de paiement. Le microprocesseur de l'unité de traitement 32 met en oeuvre les étapes du procédé de vérification de l'authenticité, selon les instructions du programme d'ordinateur 33 pour transmettre une requête d'obtention d'une information d'identification.

Pour cela, le dispositif comprend, outre la mémoire tampon 31, des moyens de transmission de donnée sans contacte et éventuellement un processeur de chiffrement et éventuellement des moyens de communications, tels que des modules de communication réseau.

Ces moyens peuvent se présenter sous la forme d'un processeur particulier implémenté au sein du dispositif, ledit processeur étant un processeur sécurisé. Selon un mode de réalisation particulier, ce dispositif met en oeuvre une application particulière qui est en charge de la réalisation des transactions, cette application étant par exemple fournie par le fabricant du processeur en question afin de permettre l'utilisation dudit processeur. Pour ce faire, le processeur comprend des moyens d'identification unique. Ces moyens d'identification unique permettent d'assurer l'authenticité du processeur. Ces moyens d'identification unique peuvent par exemple être utilisés conjointement au moyens de transmission de données vers le serveur d'authentification en vue d'assurer que la requête d'authentification est transmise par un terminal qui est autorisé à effectuer des contrôles d'authenticité de terminaux de paiement.

Par ailleurs, le dispositif comprend en outre les moyens de comparaison d'un identifiant fourni, parmi une pluralité d'identifiants de terminaux de paiement. Ces moyens se présentent également comme des interfaces de communications permettant d'échanger des données sur des réseaux de communication, des moyens d'interrogations et de mise à jour de base de données. Le dispositif comprend également des moyens de délivrance d'une assertion d'authenticité de terminal de paiement (l'assertion d'authenticité peut par exemple être une donnée binaire). Ces moyens peuvent comprendre un écran d'affichage, un avertisseur sonore ou des modules d'interfaçage avec de tels moyens existants afin d'informer un commerçant de l'authenticité ou non du ou des terminaux de paiement en sa possession. L'assertion d'authenticité peut par exemple être une donnée binaire, activant ou non les moyens préalablement présentés en fonction du mode de réalisation du terminal.

On décrit, en relation avec la figure 4, un terminal de paiement comprenant des moyens permettant l'exécution du procédé décrit préalablement.

Par exemple, le terminal de paiement comprend une mémoire 41 constituée d'une mémoire tampon, une unité de traitement 42, équipée par exemple d'un microprocesseur, et pilotée par le programme d'ordinateur 43, mettant en oeuvre nécessaires à la mise en oeuvre des fonctions de paiement.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple des données bancaires ou des données représentatives d'un achat. Le microprocesseur de l'unité de traitement 42 met en oeuvre les étapes du procédé de vérification de l'authenticité, selon les instructions du programme d'ordinateur 43 pour effectuer des paiements et notifier le succès ou l'échec de ces paiement.

Pour cela, le terminal de paiement comprend, outre la mémoire tampon 41, des moyens de transmission de donnée sans contacte et éventuellement un processeur de chiffrement et éventuellement des moyens de communications, tels que des modules de communication réseau.

Selon l'invention, un tel terminal de paiement comprend en outre des moyens de transmission, en champs proche, d'une donnée d'identification. Ces moyens peuvent être pilotés par le processeur de l'unité de traitement 42 en fonction du programme d'ordinateur 43 lorsque le terminal ne comprend pas d'étiquette sans contact dédiée. De manière complémentaire, un tel terminal de paiement peut comprendre une antenne spécifique, intégré au boitier du terminal de paiement (par exemple moulée dans le plastique de celui-ci) antenne destinée à entrer en contact avec un module de réception/transmission sans contact, par exemple soudé sur une carte de circuit imprimé du terminal de paiement. La liaison entre ce module et l'antenne peut par exemple être une liaison par collage. Dans un tel mode de réalisation, lorsque la coque du terminal est démontée, l'extrémité de l'antenne est arrachée du module sans contact. Plus particulièrement, un point de « faiblesse » est introduit au niveau de la sortie de l'antenne (au niveau du plastique du boitier) de sorte qu'en cas de démontage, ce soit ce point qui soit rompu).

Dès lors, il n'est pas possible de remonter le terminal et faire en sorte que l'antenne soit reconstruite. Ainsi, en cas de vol et de démontage du terminal de paiement, celui-ci ne sera plus à même d'être authentifié par un terminal de vérification d'authenticité.

## Revendications

1. Procédé de vérification d'une authenticité d'un terminal de paiement (POS), mis en oeuvre à partir d'un dispositif de vérification d'authenticité (DVAuth), procédé **caractérisé en ce qu'**il comprend :
- une étape de transmission (100), au terminal de paiement (POS), d'une requête d'obtention (RqObt) d'une donnée d'identification (AuthD), par l'intermédiaire d'une interface de communication sans contact ;
- une étape de réception (150), par l'intermédiaire de ladite interface de communication sans contact, en provenance du terminal de paiement (POS), d'une réponse (RepQVA) à ladite requête d'obtention d'une donnée d'identification (AuthD) ;
- une étape de comparaison (200) d'un champ (FldDAuth) de ladite réponse (RepQVA) avec au moins une donnée d'identification (AuthDpe) préalablement enregistrée.
- lorsque le champ (FldDAuth) comprend une donnée d'identification identique à ladite au moins une donnée d'identification (AuthDpe) préalablement enregistrée, une étape de délivrance (250) d'une assertion d'authenticité dudit terminal de paiement (POS) ;
- lorsque le champ (FldDAuth) comprend une donnée d'identification différente de ladite au moins une donnée d'identification (AuthDpe) préalablement enregistrée, une étape de délivrance (250) d'une information d'absence d'authentification du terminal de paiement (POS).

2. Procédé de vérification d'une authenticité d'un terminal de paiement (POS), **caractérisé en ce que** ladite interface de communication sans contact est une interface NFC.

3. Procédé de vérification selon la revendication 1, **caractérisé en ce que** lorsqu'aucune réponse (RepQVA) n'est reçue ladite étape de transmission (100) d'une requête d'obtention (RqObt) d'une donnée d'identification (AuthD) est mise en oeuvre de manière itérative durant une durée préalablement déterminée avant de délivrer (250) une information d'absence d'authentification du terminal de paiement (POS).

4. Procédé de vérification d'une authenticité d'un terminal de paiement (POS) selon la revendication 1, **caractérisé en ce que** ladite étape de comparaison (200) comprend :
- une étape de déchiffrement de la réponse délivrant une réponse déchiffrée ;
- une étape d'obtention, au sein d'une structure de données, d'au moins une donnée d'identification associée audit terminal de paiement, délivrant ladite au moins une donnée d'identification (AuthDpe) préalablement enregistrée.

5. Procédé de vérification d'une authenticité d'un terminal de paiement (POS) selon la revendication 1, **caractérisé en ce que** ladite donnée d'identification comprend en outre au moins une composante évolutive dans le temps et **en ce que** cette composante évolutive dans le temps est issue d'un temps de référence calculé en fonction dudit terminal de vérification d'authenticité.

6. Procédé de vérification d'une authenticité d'un terminal de paiement (POS) selon la revendication 1, **caractérisé en ce qu'**il comprend :
- une étape d'obtention d'un temps de référence ;
- une étape de calcul d'une composante évolutive dans le temps en fonction de ce temps de référence.

7. Dispositif de vérification d'une authenticité (DVAuth) d'un terminal de paiement (POS), dispositif **caractérisé en ce qu'**il comprend :
- des moyens de transmission (100), au terminal de paiement (POS), d'une requête d'obtention (RqObt) d'une donnée d'identification (AuthD), par l'intermédiaire d'une interface de communication sans contact ;
- des moyens de réception (150), par l'intermédiaire de ladite interface de communication sans contact, en provenance du terminal de paiement (POS), d'une réponse (RepQVA) à ladite requête d'obtention d'une donnée d'identification (AuthD) ;
- des moyens de comparaison (200) d'un champ (FldDAuth) de ladite réponse (RepQVA) avec au moins une donnée d'identification (AuthDpe) préalablement enregistrée.
- des moyens de délivrance (250) d'une assertion d'authenticité dudit terminal de paiement (POS) ;
- des moyens de délivrance (250) d'une information d'absence d'authentification du terminal de paiement (POS).

8. Terminal de paiement (POS) du type comprenant un dispositif d'affichage, un clavier de saisie d'information, des moyens de lectures de données en provenance d'au moins un dispositif de paiement et des moyens de connexion à au moins un réseau de communication, terminal **caractérisé en ce qu'**il comprend en outre des moyens de stockage, au sein d'une zone mémoire spécifique, d'au moins une donnée représentative d'une identification dudit terminal et des moyens de réception d'une requête d'obtention de ladite donnée représentative d'une identification dudit terminal et des moyens de transmission de ladite donnée représentative d'une identification dudit terminal.

9. Terminal de paiement selon la revendication 8, **caractérisé en ce qu'**il comprend un dispositif de vérification d'une authenticité (DVAuth) selon la revendication 7.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de vérification d'une authenticité selon la revendication 1, lorsqu'il est exécuté sur un ordinateur.
